# EUROPÄISCHE PATENTANMELDUNG

(11) **EP 0 950 500 A1**
(43) Veröffentlichungstag der Anmeldung: **20.10.1999**
(21) Anmeldenummer: 99106730.7
(22) Anmeldetag: 03.04.1999
(51) Int. Cl.: B29C 47/06, B29C 47/70, B29C 47/00, B29C 47/28

(54) **Verfahren und Vorrichtung zur Herstellung mehrschichtiger Kunststoffrohre aus Polymermaterialien**

(30) Priorität: 16.04.1998 DE 19816790
(71) Anmelder: CPM Compounding, Processing, Machinery GmbH, 49124 Georgsmarienhütte (DE)
(72) Erfinder: Krüger, Ernst Dr., 49124 Georgsmarienhütte (DE)
(74) Vertreter: Cohausz & Florack

(57) **Zusammenfassung**

Die Erfindung betrifft ein Verfahren und eine Vorrichtung zur Herstellung mehrschichtiger Kunststoffrohre aus Polymermaterialien, mit einem am Ausgang eines Extruders angeschlossenen Hauptkanal (35) für eine erste Rohrschicht, mindestens einem mit dem Hauptkanal (35) verbundenen Zuführungselement (33,34) für eine zusätzliche Rohrschicht und einem formgebenden Rohrkopf (44). Um mehrschichtige Kunststoffrohre mit unterschiedlichen Durchmessern und Schichtdicken kostengünstig herstellen zu können, wird bei einer derartigen Vorrichtung vorgeschlagen, daß der Hauptkanal (35) und das sich daran in Fließrichtung anschließende Zuführungselement (33,34) derart ausgebildet sind, daß über den Hauptkanal (35) zugeführtes Polymermaterial im wesentlichen geradlinig geführt durch das Zuführungselement fließt. Das Kennzeichen des erfindungsgemäßen Verfahrens besteht dementsprechend darin, daß über den Hauptkanal (35) zugeführtes Polymermaterial im wesentlichen geradlinig durch das bzw. die Zuführungselemente (33,34) geleitet wird.

## Beschreibung

Die Erfindung betrifft ein Verfahren und eine Vorrichtung zur Herstellung mehrschichtiger Kunststoffrohre aus Polymermaterialien, mit einem am Ausgang eines Extruders angeschlossenen Hauptkanal für eine erste Rohrschicht, mindestens einem mit dem Hauptkanal verbundenen Zuführungselement für eine zusätzliche Rohrschicht und einem formgebenden Rohrkopf.

Ein derartiges Verfahren und eine entsprechende Vorrichtung sind aus der DE 41 35 336 A1 bekannt. Die hiermit erzeugten Rohre besitzen einen Verbundwandaufbau, wobei sich im Querschnitt an eine Rohraußenschicht aus kompaktem Polymermaterial eine anders strukturierte Polymerschicht als mittlerer Rohrwandbereich anschließt, der nach innen wiederum von einer Schicht aus kompakterem Polymermaterial abgedeckt wird. Das kompakte Polymermaterial für die Rohrinnenschicht wird dabei in einem zylindrischen Werkzeugbereich der bis dahin gemeinsam über einen Werkzeugdorn geförderten Kombination aus Rohraußenschicht und Mittelschicht zugeführt. Das kompaktere Polymermaterial der Innenwand wird an dieser Stelle mit dem inneren Umfang der Mittelschicht durch Extrusionsschweißung verbunden. Dieses bekannte Verfahren und die entsprechende Vorrichtung haben jedoch den Nachteil, daß ein Wechsel von Rohrquerschnitten bzw. Schichtdicken nur mit einem erheblichen Aufwand an Umbauarbeiten durchgeführt werden kann, wobei eine Vielzahl spezifischer, relativ kompliziert herzustellender Werkzeugteile vorgehalten werden muß. Insbesondere ist die Herstellung mehrschichtiger Kunststoffrohre mit mehr als drei Schichten sehr zeit- und arbeitsaufwendig und technisch nur schwierig zu realisieren.

Aufgabe der vorliegenden Erfindung ist es, eine Vorrichtung und ein Verfahren der eingangs genannten Art zu schaffen, die eine einfache und kostengünstige Herstellung von mehrschichtigen Kunststoffrohren mit unterschiedlichen Durchmessern und Schichtdicken ermöglichen. Insbesondere soll die Vorrichtung aus möglichst einfach herzustellenden Komponenten zusammengesetzt sein.

Diese Aufgabe wird hinsichtlich der Vorrichtung dadurch gelöst, daß der Hauptkanal und das sich daran in Fließrichtung anschließende Zuführungselement derart ausgebildet sind, daß über den Hauptkanal zugeführtes Polymermaterial im wesentlichen geradlinig geführt durch das Zuführungselement fließt.

Die geradlinige Führung des Polymermaterials hat den Vorteil, daß in der Vorrichtung weitgehend zylindrische bzw. geradlinige Komponenten zum Einsatz kommen, die sich wesentlich einfacher und damit kostengünstiger herstellen lassen als konische Werkzeugdorne und diesen zugeordnete, ebenfalls konisch ausgebildete Kanalabschnitte. Versuche mit einer erfindungsgemäßen Vorrichtung haben Kunststoffrohre hoher Qualität ergeben. Dies ist insofern überraschend, als daß bislang allgemein davon ausgegangen wurde, daß im Bereich des Zuführungselements eine Homogenisierung und Extrusionsverschweißung des Polymermaterials durch Verwendung von den Materialstrom nach außen oder innen umlenkenden Kanalabschnitten erforderlich sei, um mehrschichtige Kunststoffrohre hoher Qualität zu erzielen. Tatsächlich genügt es aber, den Materialstrom stattdessen nur im Bereich des formgebenden Rohrkopfes einer konvergierenden oder divergierenden Umlenkung zu unterwerfen.

Eine vorteilhafte Ausgestaltung der Erfindung besteht darin, daß das Zuführungselement in Fließrichtung vor dem formgebenden Rohrkopf angeordnet ist, so daß die Polymermaterialien als Vollstrangströmung zusammengeführt dem Rohrkopf zugeführt werden. Diese Ausgestaltung beruht auf der Erkenntnis, daß sich zusammengeführte Polymermaterialien ähnlicher Zusammensetzung in der Schmelze auch bei längeren Strömungswegen nicht miteinander vermischen. Bei einer entsprechend ausgestalteten Vorrichtung können die einzelnen Schichtdicken daher durch Einstellung der jeweiligen zusammengeführten Teilströmungen auf einfache Weise variiert werden. Ein Wechsel der Rohrdurchmesser kann ebenfalls relativ einfach erfolgen, indem lediglich ein entsprechender Rohrkopfwechsel durchgeführt wird. Ein Umbau des Zuführungselements bzw. der Zuführungselemente oder des Hauptkanals ist dabei nicht erforderlich.

Eine vorteilhafte Ausgestaltung der erfindungsgemäßen Vorrichtung besteht darin, daß vorzugsweise jedes Zuführungselement segmentartig ausgebildet ist. Der segmentartige Aufbau der Vorrichtung ermöglicht nicht nur eine gute Zugänglichkeit der Zuführungskanäle der Zuführungselemente zum Zwecke von Reinigungsarbeiten, sondern auch eine einfache Variation bzw. Kombination verschiedener und/oder gleicher Zuführungselemente. So können auch Kunststoffrohre mit mehr als zwei oder drei Schichten durch Aneinanderreihen einer entsprechenden Anzahl von Zuführungselementen bzw. Zuführungssegmenten auf einfache Weise hergestellt werden.

Eine andere vorteilhafte Ausgestaltung der erfindungsgemäßen Vorrichtung besteht darin, daß die Zuführungselemente jeweils einen zur Längsachse des Hauptkanals schräg verlaufenden Zuführungskanal aufweisen, wobei die Längsachse des Hauptkanals und die Längsachse des Zuführungskanals in Fließrichtung einen spitzen Winkel einschließen. Diese Ausgestaltung ist strömungstechnisch günstig, da sie dem Auftreten von Ablagerungen und Verbrennungen bei der Verwendung thermisch empfindlicher Materialien entgegenwirkt, so daß aufwendige Reinigungsarbeiten vermieden werden.

Nach einer weiteren vorteilhaften Ausgestaltung ist vorgesehen, daß das Zuführungselement mit einem rohrförmigen Strömungsteiler versehen ist, der einen in Fließrichtung offenen Ringraum aufweist, über den Polymermaterial für eine Rohrmittelschicht zuführbar ist. Diese Ausgestaltung ermöglicht die Verwirklichung einer kompaktbauenden Vorrichtung zur Herstellung drei- und mehrschichtiger Kunststoffrohre.

Der Strömungsteiler kann dabei nach einer weiteren vorteilhaften Ausgestaltung mit einer auswechselbaren Ringraumwandung versehen sein. Durch unterschiedlich ausgebildete Ringraumwandungen kann somit auf einfache Weise der Materialfluß für die Rohrmittelschicht und/oder Rohraußenschicht beeinflußt werden. Dies kann vorzugsweise mit einer auswechselbaren Ringraumwandung erfolgen, die einen die Strömungsquerschnittsfläche im Ringraum verengenden Bereich aufweist. Für ein einfaches Auswechseln der Ringraumwandung ist diese an dem Strömungsteiler anschraubbar ausgebildet.

Nach einer weiteren vorteilhaften Ausgestaltung kann ein Kanalabschnitt mit einem elastischen Innenumfangsbereich vorgesehen sein, der mindestens ein Verstellelement aufweist, mittels dem die Strömungsquerschnittsfläche veränderbar ist. Diese Ausgestaltung ermöglicht eine Beeinflussung der Strömung im Bereich der Rohraußenschicht, so daß die Stärke der Rohraußenschicht bei Bedarf auf einfache Weise verändert werden kann. Das Verstellelement kann dabei vorzugsweise so ausgestaltet sein, daß der Durchgang des durch den Kanalabschnitt und den Strömungsteiler begrenzten Ringraums durch den elastischen Innenumfangsbereich mittels mindestens einem Verstellelements zu verstellen ist.

Eine weitere bevorzugte Ausgestaltung der erfindungsgemäßen Vorrichtung besteht darin, daß deren Hauptkanal und/oder deren Zuführungselemente so hergerichtet sind, daß sich bei Zuführung von Polymermaterial mit länglichen Füllstoffen eine Orientierung der Füllstoffe im wesentlichen in Längsrichtung und/oder durch Strömungsgeometrien quer zur Längsrichtung des hergestellten Kunststoffrohres ergibt. Hierdurch kann die Festigkeit der herzustellenden Rohre erheblich vergrößert werden.

Verfahrensmäßig wird die der Erfindung zugrundeliegende Aufgabe dadurch gelöst, daß über den Hauptkanal zugeführtes Polymermaterial im wesentlichen geradlinig geführt durch das bzw. die Zuführungselemente geleitet wird.

Nach einer vorteilhaften Ausgestaltung des Verfahrens werden die Polymermaterialien der verschiedenen Rohrschichten zu einer Vollstrangströmung zusammengeführt und danach dem formgebenden Rohrkopf zur Herstellung des Rohrprofils zugeführt. Dabei kann vorzugsweise für eine Rohrmittelschicht Polymermaterial zugeführt werden, das Rezepturkomponenten enthält, die unter atmosphärischen Bedingungen schäumen.

Eine andere bevorzugte Ausgestaltung des erfindungsgemäßen Verfahrens ist dadurch gekennzeichnet, daß zur Bildung einer Rohraußenschicht Polymermaterial zugeführt wird, das mindestens 40% Verstärkungsstoffe vorwiegend faserförmiger Beschaffenheit aufweist, zur Bildung einer Rohrinnenschicht Polymermaterial zugeführt wird, das mindestens 20% anorganische Füllstoffe mit steifigkeitserhöhender Beschaffenheit aufweist, und zur Bildung einer Rohrmittelschicht Polymermaterial zugeführt wird, das mindestens 12% anorganische Füllstoffe aufweist. Auf diese Weise lassen sich dreischichtige Kunststoffrohre besonders hoher Festigkeit erzielen.

Besonders gute Festigkeitseigenschaften lassen sich dabei insbesondere dann erzielen, wenn die Dicken der Rohrschichten so bemessen werden, daß die Rohraußenschicht 10% bis 35% der Gesamtrohrwanddicke ausmacht.

Je nach Verwendung der mehrschichtigen Kunststoffrohre ist es ferner vorteilhaft, wenn Schichten mit profilierten Schichtverteilungen erzeugt werden. Dies kann nach einer Ausgestaltung des erfindungsgemäßen Verfahrens vorzugsweise durch Rotations- und/oder Reversierbewegungen von profilierten Bereichen der Zuführungselemente und/oder des Hauptkanals erreicht werden.

Weitere vorteilhafte Ausgestaltungen und Merkmale der Erfindung sind in den Unteransprüchen und der nachfolgenden Beschreibung angegeben.

Nachstehend wird die Erfindung anhand einer mehrere Ausführungsbeispiele darstellenden Zeichnung erläutert. Im einzelnen zeigen:
- Fig. 1: eine Längsschnittansicht einer ersten Ausführungsform einer erfindungsgemäßen Vorrichtung zur Herstellung dreischichtiger Kunststoffrohre;
- Fig. 2: eine Querschnittsansicht der in Fig. 1 gezeigten Vorrichtung entlang der Schnittlinie A-A;
- Fig. 3: eine Längsschnittansicht einer zweiten Ausführungsform einer erfindungsgemäßen Vorrichtung zur Herstellung dreischichtiger Kunststoffrohre;
- Fig. 4: eine Längsschnittansicht einer dritten Ausführungsform einer erfindungsgemäßen Vorrichtung mit einem Strömungsteiler zur Herstellung dreischichtiger Kunststoffrohre; und
- Fig. 5: eine Längsschnittansicht einer vierten Ausführungsform einer erfindungsgemäßen Vorrichtung mit einem Strömungsteiler zur Herstellung dreischichtiger Kunststoffrohre.

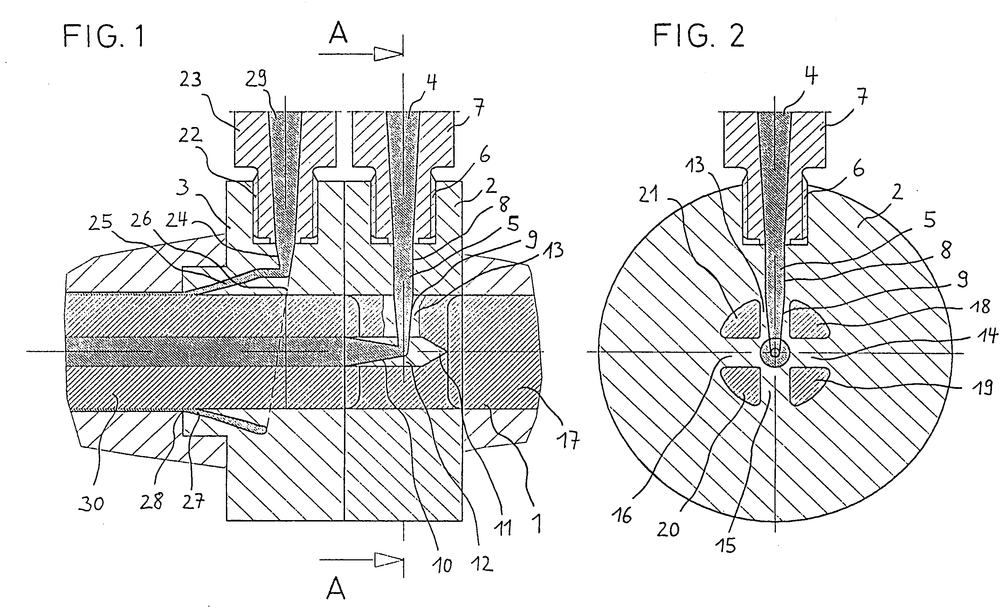

Die in den Figuren 1 und 2 schematisch dargestellte Vorrichtung ist segmentartig ausgebildet und weist einen am Ausgang eines Hauptextruders (nicht gezeigt) angeschlossenen Hauptkanal 1, ein erstes mit dem Hauptkanal 1 verbundenes Zuführungselement 2 zur Bildung einer Rohrinnenschicht, ein zweites mit dem ersten Zuführungselement 2 verbundenes Zuführungselement 3 zur Bildung einer Rohraußenschicht und einen formgebenden Rohrkopf (nicht gezeigt) auf.

Mittels des ersten Zuführungselements 2 wird Polymermaterial 4 in die Mittelachse des Hauptkanals 1 in Fließrichtung eingespritzt. Das erste Zuführungselement 2 weist hierzu einen Zuführungskanal 5 auf, der über eine durch eine Schraubverbindung 6 befestigte Zuführungsleitung 7 mit einem zweiten Extruder (nicht gezeigt) verbunden ist. Der Zuführungskanal 5 hat einen zylindrischen Kanalabschnitt 8, an den sich ein konisch verengender Kanalabschnitt 9 anschließt, der etwa bis zur Mittelachse des Hauptkanals 1 geführt ist und dort in einen koaxial zum Hauptkanal 1 verlaufenden, sich konisch weitenden Kanalabschnitt 10 übergeht. Der Kanalabschnitt 10 ist in einem dornartigen, mit einer Spitze 11 versehenen Teil 12 des Zuführungselements 2 ausgebildet. Dieses dornartige Teil 12 ist durch vier um etwa 90° versetzt angeordnete Stege 13,14,15 und 16 an dem Zuführungselement 2 gehalten. Das durch den Hauptkanal 1 zugeführte Polymermaterial 17 wird durch das dornartige Teil 12 und die Stege 13,14,15,16 in vier Teilströme 18, 19,20 und 21 aufgegliedert, die sich in Fließrichtung hinter dem Zuführungselement 2 wieder vereinigen und das an dieser Stelle in der Mittelachse zugeführte Polymermaterial 4 koaxial umschließen. Der Innendurchmesser des Hauptkanals 1 bleibt dabei unverändert, so daß sich die Fließgeschwindigkeit des durch den Hauptkanal 1 zugeführten Polymermaterials 17 innerhalb der durch die Stege 13,14,15,16 definierten Teilströme 18,19,20 und 21 erhöht. Hinter den Stegen verlangsamt sich dagegen die Fließgeschwindigkeit des Polymermaterials 17, da die Querschnittsfläche des in der Mittelachse zugeführten Polymermaterials 4 kleiner ist als die Gesamtquerschnittsfläche der Stege 13,14,15,16. Diese Geschwindigkeitsveränderung unterstützt die Homogenisierung und Extrusionsverschweißung der Polymermaterialien 4 und 17.

Das zweite Zuführungselement 3, das sich direkt an das erste Zuführungselement 2 anschließt, ist ebenfalls über eine Schraubverbindung 22 mit einer Zuführungsleitung 23 verbunden. Die Zuführungsleitungen 7 und 23 können an verschiedenen Extrudern oder zusammen an einem gemeinsamen Extruder angeschlossen sein. Das zweite Zuführungselement 3 weist einen sich konisch verengenden Kanalabschnitt 24 auf, der in einen Ringspalt 25 mündet. Es ist zu erkennen, daß der Ringspalt 25 in dem Zuführungselement 3 schräg endet, d.h. das Ende 26 des Ringspalts 25 ist um einen bestimmten Winkel zu der im wesentlichen senkrecht zur Mittelachse des Hauptkanals 1 verlaufenden Längsachse der Zuführungsleitung 23 und des sich konisch verengenden Kanalabschnitts 24 geneigt. Der sich konisch verengende Kanalabschnitt 24 mündet dabei - entgegen der Fließrichtung des Hauptkanals gesehen - an der tiefsten Stelle des Ringspaltendes 26 in den Ringspalt 25 ein.

Der Ringspalt 25 läuft in Fließrichtung des Hauptkanals 1 betrachtet konisch auf diesen zu. Die Öffnung 27 des Ringspalts 25 ist dabei an einer Innenkante 28 des Zuführungselements 3 angeordnet, und zwar derart, daß das über die Zuführungsleitung 23 zugeführte Polymermaterial 29 ringförmig um das über den Hauptkanal zugeführte Material 17 gelegt wird, wobei der Durchmesser des Strömungsquerschnitts hinter dem Zuführungselement 3 nur geringfügig größer als der Durchmesser des Hauptkanals 1 ist. Es ist allerdings auch möglich den Durchmesser des Strömungsquerschnitts auch an dieser Stelle konstant zu halten. Dabei kann an dieser Stelle eine Beschleunigung des bereits zusammengeführten Polymermaterials 4,17 erfolgen. Der Grad der Beschleunigung hängt von dem Massenstrom des zugeführten Polymermaterials 29 ab.

Die Polymermaterialien 4,17,29 für das herzustellende mehrschichtige Kunststoffrohr werden somit zu einem Vollstrang 30 zusammengeführt, in welchem die einzelnen Rohrschichten im wesentlichen koaxial zueinander angeordnet sind. Die so zusammengeführten Polymermaterialien 4,17,29 werden dann insgesamt als Vollstrang 30 einem formgebenden Rohrkopf (nicht gezeigt) mit einem in der Mittelachse des Hauptkanals 1 angeordneten Dorn zugeführt.

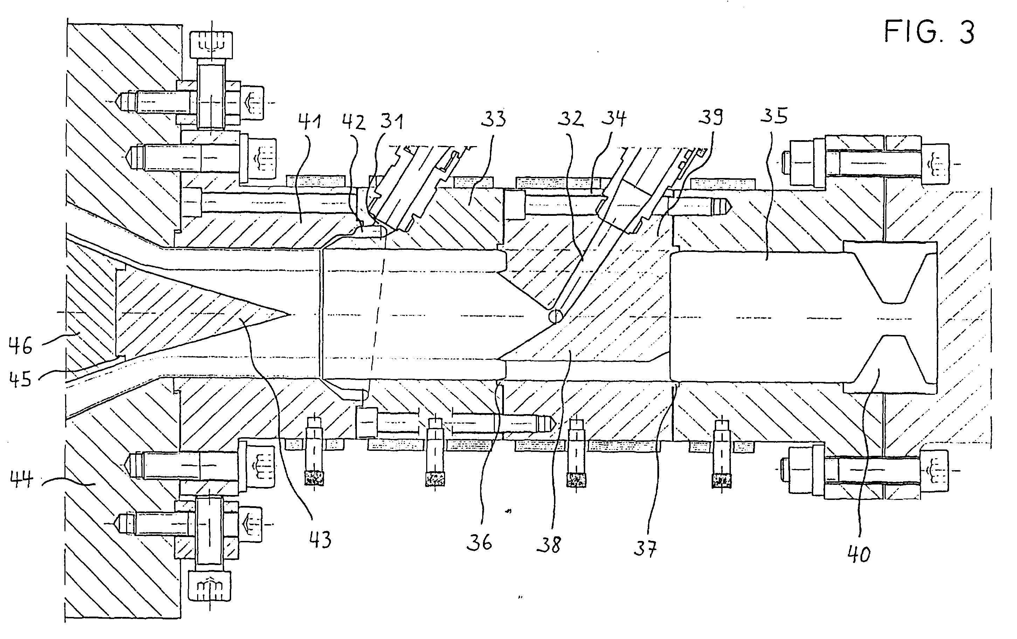

Die in Fig. 3 dargestellte Vorrichtung unterscheidet sich von der in den Figuren 1 und 2 gezeigten Vorrichtung im wesentlichen dadurch, daß die Zuführungskanäle 31,32 der Zuführungselemente 33,34 zur Längsachse des Hauptkanals 35 nicht senkrecht, sondern jeweils schräg verlaufen, so daß die Längsachse des Hauptkanals 35 und die Längsachse des jeweiligen Zuführungskanals 31 bzw. 32 in Fließrichtung jeweils einen spitzen Winkel einschließen. Zur bündigen, fluchtenden Aneinanderreihung weisen die einzelnen Segmente der Vorrichtung an ihren Verbindungsstellen entsprechende Zentriereinrichtungen 36,37 auf. An den Zuführungskanälen 31,32 der Zuführungselemente 33,34 sind vorzugsweise elastische Zuführungsleitungen in Form von beheizbaren Schläuchen angeschlossen.

Das erste segmentförmige Zuführungselement 34, über das das Material für die Rohrinnenschicht zugeführt wird, ist bei dieser Ausführungsform mit einem Dorn 38 versehen, der über nur einen Steg 39 gehalten ist. Der Innendurchmesser des Hauptkanals 35 und der Innendurchmesser des Zuführungselements 34 sind wiederum gleich groß, wobei in dem Hauptkanal 35 in Fließrichtung vor dem Zuführungselement 34 eine Verengung 40 der Strömungsquerschnittsfläche ausgebildet ist.

Das zweite segmentförmige Zuführungselement 33 bildet mit einem weiteren Segment 41 einen Ringspalt 42. Der Innendurchmesser des zweiten Zuführungselements 33 und der Innendurchmesser des Segments 41 stimmen mit dem Innendurchmesser des Hauptkanals 35 überein. In das Segment 41 ragt die Konusspitze 43 des Rohrkopfes 44, der aus dem aus den zusammengeführten Polymermaterialien gebildeten Vollstrang das Hohlprofil eines herzustellenden dreischichtigen Kunststoffrohres formt. Die Konusspitze 43 ist mit einem Schraubgewinde 45 versehen und an einem ebenfalls konischen, ein entsprechendes Innengewinde aufweisenden Dorn 46 des Rohrkopfes 44 angeschraubt.

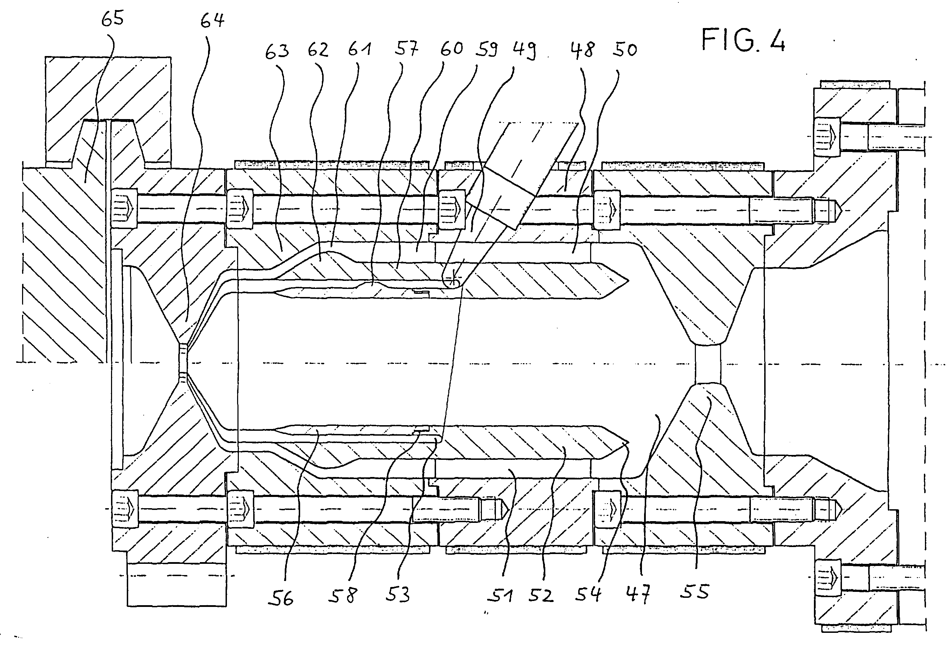

Fig. 4 zeigt eine dritte Ausführungsform einer erfindungsgemäßen Vorrichtung zur Herstellung mehrschichtiger Kunststoffrohre. Die segmentartig aufgebaute Vorrichtung weist einen Hauptkanal 47 und ein Zuführungselement 48 auf. Das Zuführungselement 48 ist mit einem Zuführungskanal 49 versehen, dessen Längsachse schräg zu der Längsachse des Hauptkanals verläuft. Das Zuführungselement 48 ist mit einem rohrförmigen Strömungsteiler 52 versehen, der einen in Fließrichtung offenen Ringraum 53 aufweist, in den der Zuführungskanal 49 mündet und über den Polymermaterial für eine Rohrmittelschicht zugeführt wird. Es ist zu erkennen, daß der Ringraum 53 in dem Zuführungselement 48 ebenso wie die Ringspalte 25 und 42 der in den Figuren 1 und 3 gezeigten Ausführungsformen schräg endet. Der rotationssymmetrisch ausgebildete Strömungsteiler 52 ist über zwei diametral angeordnete Haltestege 50,51 mit dem Zuführungselement 48 verbunden und weist eine spitzzulaufende Stirnseite 54 auf, die hinter einer Verengung 55 innerhalb des Hauptkanals 47 angeordnet ist. Der Kanalinnendurchmesser ist dabei vor der Verengung 55 kleiner als dahinter.

Der Strömungsteiler 52 weist ferner eine auswechselbare Ringraumwandung 56 mit einem die Strömungsquerschnittsfläche im Ringraum verengenden Bereich 57 auf. Die auswechselbare Ringraumwandung 56 ist durch eine Gewindeverbindung 58 an dem Strömungsteiler 52 befestigt. Der Strömungsteiler 52 begrenzt einen ringförmigen Durchgang 59, der im Bereich der mit dem Strömungsteiler 52 einstückig ausgebildeten äußeren Ringraumwandung 60 eine Verengung 61 in Form eines erweiterten Außenumfangsabschnitts 62 aufweist. Diesem erweiterten, in Fließrichtung spitz auslaufenden Außenumfangsabschnitt 62 ist ein Segment 63 mit einer reduzierten Innenquerschnittsfläche zugeordnet, derart, daß die durch den Durchgang 59 fließende, die Außenschicht des herzustellenden Rohres bildende Teilströmung schräg in Richtung der Mittelachse der Vorrichtung umgelenkt wird und sich ringförmig um die über den Ringraum 53 zugeführte Rohrmittelschicht legt. Die Rohrmittelschicht ihrerseits legt sich hinter der in Fließrichtung ebenfalls spitz auslaufenden, auswechselbaren Ringraumwandung 56 um die durch den Strömungsteiler 52 abgeteilte Rohrinnenschicht. Die so zu einem Vollstrang zusammengeführten Polymermaterialien werden danach über eine weitere Verengung 64 einem Rohrkopf 65 zugeführt, der das Hohlprofil des herzustellenden Kunststoffrohres formt.

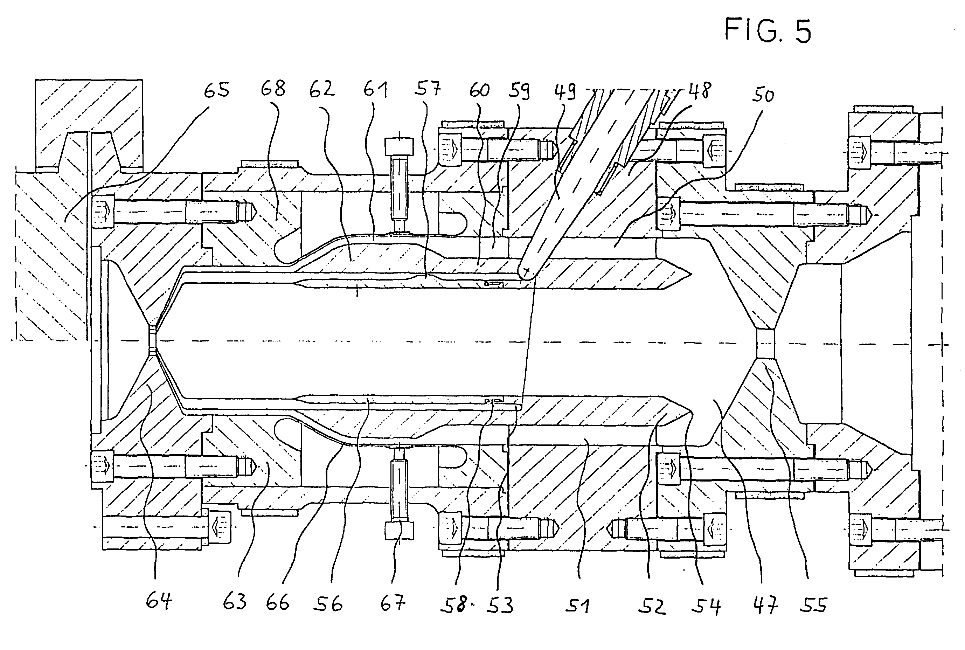

Die in Fig. 5 dargestellte Vorrichtung unterscheidet sich von der in Fig. 4 gezeigten Vorrichtung im wesentlichen durch einen elastischen Innenumfangsbereich 66, der mit mehreren Verstellelementen in Form von gleichmäßig am Umfang verteilt angeordneten Verstellschrauben 67 versehen ist, mittels denen die Strömungsquerschnittsfläche des durch den Strömungsteiler 52 und den Kanalabschnitt 68 begrenzten Ringraums 59 verstellt werden kann. Der elastische membranartige Innenumfangsbereich 66, der gegenüberliegend des erweiterten Außenumfangsabschnitts 62 des Strömungsteilers 52 angeordnet ist, besteht vorzugsweise aus Federstahl und ist so ausgebildet, daß der Durchgang des Ringraums 59 mittels der Verstellschrauben 67 bei Bedarf einstellbar ist. Durch eine taktweise Verstellung der Verstellschrauben 67 ist es auch möglich, eine wellenförmige Rohraußenschicht bzw. eine profilierte Schichtverteilung zu erzeugen.

Die Erfindung beschränkt sich in ihrer Ausführung nicht auf die vorstehend beschriebenen Ausführungsbeispiele. Vielmehr ist eine Vielzahl von Varianten möglich. So können mit der erfindungsgemäßen Vorrichtung nicht nur dreischichtige Kunststoffrohre, sondern durch Kombination entsprechender Zuführungselemente insbesondere auch vier-, fünf- oder sechsschichtige Kunststoffrohre hergestellt werden. Dabei kann jedem Zuführungselement ein eigener Extruder oder mehreren Zuführungselementen ein gemeinsamer Extruder zugeordnet sein.

## Patentansprüche

1. Vorrichtung zur Herstellung von mehrschichtigen Kunststoffrohren aus Polymermaterialien, mit einem am Ausgang eines Extruders angeschlossenen Hauptkanal (1,35,47) für eine erste Rohrschicht, mindestens einem mit dem Hauptkanal (1,35,47) verbundenen Zuführungselement (2,3,33,34,48) für eine zusätzliche Rohrschicht und einem formgebenden Rohrkopf (44),
**dadurch gekennzeichnet, daß** der Hauptkanal (1,35,47) und das sich daran in Fließrichtung anschließende Zuführungselement (2,3, 33,34,48) derart ausgebildet sind, daß über den Hauptkanal zugeführtes Polymermaterial im wesentlichen geradlinig geführt durch das Zuführungselement (2,3,33,34,48) fließt.

2. Vorrichtung nach Anspruch 1,
**dadurch gekennzeichnet, daß** das Zuführungselement (2,3,33,34,48) in Fließrichtung vor dem formgebenden Rohrkopf (44) angeordnet ist, derart, daß die Polymermaterialien insgesamt als Vollstrangströmung zusammengeführt dem Rohrkopf (44) zugeführt werden.

3. Vorrichtung nach Anspruch 1 oder 2,
**dadurch gekennzeichnet, daß** das Zuführungselement (2,3,33,34,48) segmentartig ausgebildet ist.

4. Vorrichtung nach einem der vorstehenden Ansprüche,
**dadurch gekennzeichnet, daß** das Zuführungselement (33,34,48) einen zur Längsachse des Hauptkanals (35,47) schräg verlaufenden Zuführungskanal (31,32,49) aufweist, wobei die Längsachse des Hauptkanals (35,47) und die Längsachse des Zuführungskanals (31,32,49) in Fließrichtung einen spitzen Winkel einschließen.

5. Vorrichtung nach einem der vorstehenden Ansprüche,
**dadurch gekennzeichnet, daß** dem Zuführungselement (2,3,33,34,48) eine elastische Zuführungsleitung angeschlossen ist.

6. Vorrichtung nach Anspruch 5,
**dadurch gekennzeichnet, daß** die elastische Zuführungsleitung aus einem beheizbaren Schlauch besteht.

7. Vorrichtung nach einem der vorstehenden Ansprüche,
**dadurch gekennzeichnet, daß** über das Zuführungselement (2,3,33,34,48) Polymermaterial für eine Rohraußenschicht, Rohrmittelschicht oder Rohrinnenschicht zuführbar ist.

8. Vorrichtung nach einem der vorstehenden Ansprüche,
**dadurch gekennzeichnet, daß** das Zuführungselement (48) mit einem rohrförmigen Strömungsteiler (52) versehen ist, der einen in Fließrichtung offenen Ringraum (53) aufweist, über den Polymermaterial für eine Rohrmittelschicht zuführbar ist.

9. Vorrichtung nach Anspruch 8,
**dadurch gekennzeichnet, daß** der Strömungsteiler (52) mit einer auswechselbaren Ringraumwandung (56) versehen ist.

10. Vorrichtung nach Anspruch 9,
**dadurch gekennzeichnet, daß** die auswechselbare Ringraumwandung (56) einen die Strömungsquerschnittsfläche im Ringraum (53) verengenden Bereich (57) aufweist.

11. Vorrichtung nach Anspruch 9 oder 10,
**dadurch gekennzeichnet, daß** die auswechselbare Ringraumwandung (56) an dem Strömungsteiler (52) anschraubbar ist.

12. Vorrichtung nach einem der vorstehenden Ansprüche,
**dadurch gekennzeichnet, daß** ein Kanalabschnitt (68) mit einem elastischen Innenumfangsbereich (66) vorgesehen ist, der mindestens ein Verstellelement (67) aufweist, mittels dem die Strömungsquerschnittsfläche veränderbar ist.

13. Vorrichtung nach den Ansprüchen 8 und 12,
**dadurch gekennzeichnet, daß** der elastische Innenumfangsbereich (66) im Bereich des Strömungsteilers (52) angeordnet ist.

14. Vorrichtung nach den Ansprüchen 8 und 12,
**dadurch gekennzeichnet, daß** der Durchgang des durch den Kanalabschnitt (68) und den Strömungsteiler (52) begrenzten Ringraums (59) durch den elastischen Innenumfangsbereich (66) mittels des mindestens einen Verstellelements (67) einstellbar ist.

15. Vorrichtung nach Anspruch 12,
**dadurch gekennzeichnet, daß** zur Verstellung des elastischen Innenumfangsbereichs (66) eine Vielzahl von Verstellschrauben (67) gleichmäßig beabstandet am Umfang des Kanalabschnitts (68) angeordnet ist.

16. Vorrichtung nach einem der Ansprüche 8 bis 15,
**dadurch gekennzeichnet, daß** der Durchgang des durch den Kanalabschnitt (68) und den Strömungsteiler (52) begrenzten Ringraums (59) eine Verengung (61) aufweist.

17. Vorrichtung nach Anspruch 16,
**dadurch gekennzeichnet, daß** die Verengung (61) durch einen erweiterten Außenumfangsabschnitt (62) des Strömungsteilers (52) gebildet ist.

18. Vorrichtung nach Anspruch 17,
**dadurch gekennzeichnet, daß** der erweiterte Außenumfangsabschnitt (62) des Strömungsteilers (52) gegenüberliegend des elastischen Innenumfangsbereichs (66) angeordnet ist.

19. Vorrichtung nach einem der vorstehenden Ansprüche,
**dadurch gekennzeichnet, daß** in dem Hauptkanal (47) in Fließrichtung vor dem Zuführungselement (48) eine Verengung (55,64) der Strömungsquerschnittsfläche vorgesehen ist.

20. Vorrichtung nach einem der vorstehenden Ansprüche,
**gekennzeichnet, durch** mindestens zwei Zuführungselemente (2,3;33,34), die an einem gemeinsamen Extruder oder jeweils an verschiedenen Extrudern angeschlossenen sind.

21. Vorrichtung nach einem der vorstehenden Ansprüche,
**dadurch gekennzeichnet, daß** der Hauptkanal (47) und/oder das bzw. die Zuführungselemente so hergerichtet sind, daß sich bei Zuführung von Polymermaterial mit länglichen Füllstoffen eine Orientierung der Füllstoffe im wesentlichen in Längsrichtung und/oder durch Strömungsgeometrien quer zur Längsrichtung des hergestellten Kunststoffrohres ergibt.

22. Verfahren zur Herstellung von mehrschichtigen Kunststoffrohren aus Polymermaterialien unter Verwendung eines am Ausgang eines Extruders angeschlossenen Hauptkanals (1,35,47) für eine erste Rohrschicht, mindestens eines mit dem Hauptkanal verbundenen Zuführungselements (2,3;33,34;48) für eine zusätzliche Rohrschicht und eines formgebenden Rohrkopfes (44),
**dadurch gekennzeichnet, daß** über den Hauptkanal zugeführtes Polymermaterial im wesentlichen geradlinig geführt durch das bzw. die Zuführungselemente (2,3,33,34,48) geleitet wird.

23. Verfahren nach Anspruch 22,
**dadurch gekennzeichnet, daß** die Polymermaterialien der verschiedenen Rohrschichten zu einer Vollstrangströmung (30) zusammengeführt und dem formgebenden Rohrkopf (44) zur Herstellung des Rohrprofils zugeführt werden.

24. Verfahren nach Anspruch 22 oder 23,
**dadurch gekennzeichnet, daß** Polymermaterial zugeführt wird, das Rezepturkomponeneten enthält, die unter atmosphärischen Bedingungen schäumen.

25. Verfahren nach einem der Ansprüche 22 bis 24,
**dadurch gekennzeichnet, daß** zur Bildung einer Rohraußenschicht Polymermaterial zugeführt wird, das mindestens 40% Verstärkungsstoffe vorwiegend faserförmiger Beschaffenheit aufweist, zur Bildung einer Rohrinnenschicht Polymermaterial zugeführt wird, das mindestens 20% anorganische Füllstoffe mit steifigkeitserhöhender Beschaffenheit aufweist, und zur Bildung einer Rohrmittelschicht Polymermaterial zugeführt wird, das mindestens 12% anorganische Füllstoffe aufweist.

26. Verfahren nach Anspruch 25,
**dadurch gekennzeichnet, daß** die Dicken der Rohrschichten so bemessen werden, daß die Rohraußenschicht 10% bis 35% der Gesamtrohrwanddicke ausmacht.

27. Verfahren nach einem der Ansprüche 22 bis 26,
**dadurch gekennzeichnet, daß** als Polymermaterial PVC, C-PVC, ABS, SAN, PS, Polyolefine und/oder deren Derivate im Verbund oder in Kombination zugeführt werden.

28. Verfahren nach einem der Ansprüche 22 bis 27,
**dadurch gekennzeichnet, daß** durch Rotations- und/oder Reversierbewegungen von profilierten Bereichen der Zuführungselemente und/oder des Hauptkanals Schichten mit profilierten Schichtverteilungen erzeugt werden.
